# EUROPÄISCHE PATENTSCHRIFT

(11) **EP 2 502 176 B1**
(45) Veröffentlichungstag und Bekanntmachung des Hinweises auf die Patenterteilung: **28.09.2016**
(21) Anmeldenummer: 10768749.3
(22) Anmeldetag: 14.10.2010
(51) Int. Cl.: G06F 21/10, G06F 21/53, G06F 21/62

(54) **VERFAHREN UND VORRICHTUNG ZUM ZUGREIFEN AUF STEUERUNGSDATEN GEMÄSS EINER BEREITGESTELLTEN RECHTEINFORMATION**
METHOD AND APPARATUS FOR ACCESS TO CONTROL DATA ACCORDING TO A SUPPLIED RIGHTS INFORMATION
PROCÉDÉ ET DISPOSITIF POUR AVOIR ACCÈS À DES DONNÉES DE COMMANDE SELON D'UNE INFORMATION DES DROITS

(30) Priorität: 20.11.2009 DE 102009054114
(43) Veröffentlichungstag der Anmeldung: 26.09.2012
(73) Patentinhaber: Siemens Aktiengesellschaft, 80333 München (DE)
(72) Erfinder: FALK, Rainer, 85435 Erding (DE); SELTZSAM, Stefan, 85737 Ismaning (DE)
(86) Internationale Anmeldenummer: PCT/EP2010/065453
(87) Internationale Veröffentlichungsnummer: WO 2011/061020

(56) Entgegenhaltungen:
- US-A1- 2001 021 926
- US-A1- 2002 161 996
- US-A1- 2005 060 568
- US-A1- 2007 250 833
- US-A1- 2008 046 961
- US-A1- 2009 222 880
- GARFINKEL T: "Terra: a virtual machine-based platform for trusted computing", ACM SOSP. PROCEEDINGS OF THE ACM SYMPOSIUM ON OPERATING SYSTEMSPRINCIPLES; 20031019, pages 193-206, XP002340992,

## Beschreibung

Die vorliegende Erfindung betrifft ein Verfahren sowie eine Vorrichtung, welche es erlauben Zugriffsrechte auf Nutzdaten effektiv durchzusetzen, und insbesondere ein Verfahren und eine Vorrichtung zum Zugreifen auf Steuerungsdaten gemäß einer bereitgestellten Rechteinformation. Die Erfindung betrifft ferner ein Computerprogrammprodukt, welches die Durchführung des Verfahrens veranlasst sowie einen Datenspeicher, der das Computerprogrammprodukt speichert.

In Anwendungsszenarien der Automatisierung, Signalverarbeitung und Telekommunikation kommt es häufig vor, dass Nutzdaten vor fremdem Zugriff geschützt werden sollen. Bei Nutzdaten kann es sich zum Beispiel um Steuerungsdaten von mehreren Maschinen handeln, welche miteinander interagieren. So ist es zum Beispiel möglich, dass an einer Fertigungsstätte eine Vielzahl von Produktionsmaschinen zur Fertigung eines Produktes miteinander kommuniziert und ferner Daten mit entfernten Produktionsstätten und/oder Lieferanten Daten austauschen. Hierbei sollen einzelnen Empfängern, wie zum Beispiel Lieferanten, bestimmte Rechte auf die übermittelten Daten zugestanden werden. So ist es möglich, dass ein Kunde einer Produktionsfirma Konstruktionspläne eines Bauelementes übermittelt, wobei sichergestellt werden soll, dass die Produktionsfirma die entsprechenden Konstruktionspläne lediglich ausliest, nicht jedoch editiert bzw. ändert oder weitergibt.

Eine Rechteverwaltung realisiert einen Zugriffschutz auf Dokumente, unabhängig von einem Speicherort der Dokumente. Ein geschütztes Dokument kann von einem autorisierten Anwender nur entsprechend seiner dafür geltenden Zugriffsrechte geöffnet und bearbeitet werden, unabhängig davon, auf welcher Speichervorrichtung das Dokument gespeichert wurde bzw. an welche Recheneinheit das Dokument versandt wurde. Ein nicht autorisierter Außenstehender, dem keine Zugriffsrechte gewährt wurden, kann mit einer Kopie des Dokuments, die zum Beispiel elektronisch übersendet wurde, keine unautorisierte Information erhalten.

In herkömmlichen Verfahren erfolgt eine Verschlüsselung von Dokumenten, gemäß mindestens einem Verschlüsselungsalgorithmus. Der Herausgeber eines Dokuments verschlüsselt ein Dokument bevor er es freigibt und definiert zusätzlich die Rechte spezifischer Benutzer oder Gruppen am Inhalt des Dokuments. Die verschlüsselte Datei kann mitsamt Zugriffsrechten an einen Server übersendet werden. Hierbei ist es möglich, dass der Herausgeber des Dokuments eine Lizenzinformation, auch Issuance License genannt, welche die Rechte von Benutzern und Gruppen enthält, erstellt. Eine Rechtelizenz kann beispielsweise beschreiben, dass ein Dritter, zum Beispiel eine Konfigurationsmaschine, gewisse Teile eines Konstruktionsplans auslesen, ausdrucken und/oder speichern darf.

Zusätzlich kann die Lizenzinformation einen symmetrischen Schlüssel aufweisen, der zum Verschlüsseln des Dokumentes verwendet wird. Da eben dieser Schlüssel eine geheime Information darstellt, kann die Rechtelizenz mit dem öffentlichen Schlüssel des Servers verschlüsselt werden und der Herausgeber kann die Rechtelizenz digital signieren. Hierzu sind in herkömmlichen Verfahren digitale Signaturverfahren bekannt.

Die Rechtelizenz kann zentral auf einem Server gespeichert und gewartet werden. Die Rechtelizenz kann aber auch mit dem verschlüsselten Dokument in einer Datei untergebracht, d. h. einkodiert, werden und ermöglicht folglich lediglich eine weniger dynamische Rechteverwaltung. Zusätzlich zu dem Server, welcher einen zentralen Teil der Rechteverwaltung darstellt, muss es ferner einen Client geben, welcher auf jeder zugreifenden Maschine installiert sein muss, welche zugriffsgeschützte Dokumente, bzw. Konfigurationsdaten auslesen will. Der Client kann hierbei die Kommunikation mit dem Server übernehmen, um den symmetrischen Schlüssel und die Rechte eines vorliegenden Dokuments zu ermitteln. Der Client kann die gelesenen Rechte an eine weitere Ausleseeinheit weitergeben, die für die Einhaltung der Rechte vorgesehen ist. Eine Entschlüsselung des Dokuments kann der Client übernehmen, welcher ferner eine eventuell benötigte erneute Verschlüsselung zu einem späteren Zeitpunkt ausführt. Der Schlüssel kann durch den Client mittels einer Verschlüsselungstechnik vor weiteren Ausleseeinheiten geheim gehalten werden. Hierzu werden in herkömmlichen Verfahren Verschlüsselungstechniken bzw. Verschleierungstechniken wie das sogenannte Code-Obfuscation verwendet.

Für eine Rechteverwaltung müssen Steuerungsprogramme typischerweise angepasst werden, damit die Steuerungsprogramme für die Ver- und Entschlüsselung mit dem Client kommunizieren können und entsprechende Rechte durchgesetzt werden können, welche von dem Client an das Steuerungsprogramm übergeben werden.

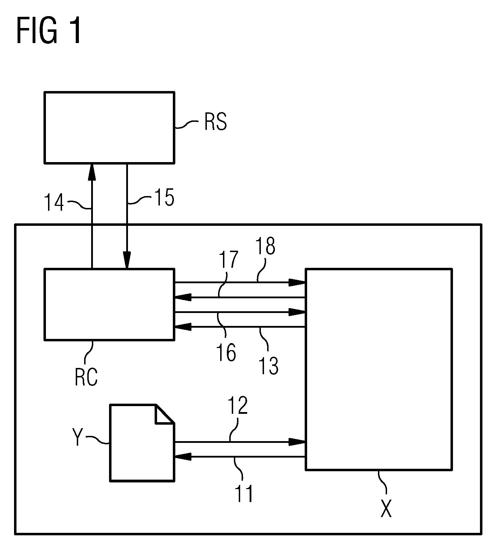

Hierzu veranschaulicht Figur 1 in einem schematischen Blockdiagramm ein Zugreifen auf zugriffsbeschränkte Nutzdaten gemäß einem herkömmlichen Verfahren. Hierbei ist eine Entschlüsselungseinheit in ein Steuerprogramm integriert, was als "native Integration" bezeichnet werden kann. Die grundlegende Integration einer Rechteverwaltung in ein Steuerprogramm besteht darin, den Quellcode eines Steuerprogramms entsprechend zu modifizieren. Dies ist für den Fall möglich, dass der Quellcode eines Steuerungsprogramms verfügbar ist. Die native Integration ist mit einem hohen zeitlichen Aufwand für den Entwickler des Steuerungsprogramms verbunden. Aus diesem Grund sind bisher nur wenige Anwendungen mit einer nativen Rechteverwaltungsunterstützung verfügbar. Bei dem herkömmlichen Verfahren der nativen Integration kann zum Beispiel wie folgt vorgegangen werden:

In einem ersten Verfahrensschritt 11 öffnet ein Steuerprogramm X ein Dokument, welches zum Beispiel Nutzdaten aufweist. In einem weiteren Verfahrensschritt 12 erfolgt ein Laden der Nutzdaten durch eine Maschine Y. Daraufhin veranlasst das Steuerprogramm X eine Authentifizierung bei einem Rechteclient RC in dem Verfahrensschritt 13. Nun kann der Rechteclient RC eine Authentifizierung bei einem Rechteserver RS in dem Verfahrensschritt 14 durchführen. Zugriffsrechte mitsamt einem kryptographischen Schlüssel für die Nutzdaten können in einem Verfahrensschritt 15 von dem Rechteserver RS an den Rechteclient RC übertragen werden. Diese Rechte können von dem Rechteclient RC an das Steuerprogramm X in einem Verfahrensschritt 16 übertragen werden, woraufhin das Steuerprogramm X eine Entschlüsselungsanforderung an den Rechteclient RC in einem Verfahrensschritt 17 übermittelt. Da nunmehr eine Authentisierung erfolgt ist, können in einem darauffolgenden Verfahrensschritt 18 die entschlüsselten Nutzdaten an das Steuerprogramm X vermittelt werden.

In einem alternativen herkömmlichen Verfahren kann die Kommunikation zwischen der Maschine Y und dem Rechteclient RC mit dem Steuerprogramm X in eine sogenannte Wrappereinheit ausgelagert werden. Diese Wrappereinheit kann Betriebssystemaufrufe des Steuerprogramms, wie zum Beispiel ein Laden von Konfigurationsdaten entgegennehmen und mit eigenen Steuerbefehlen ersetzen.

Die US 2009 / 0 222 880 A1 offenbart ein System, bei welchem Zugriffsrechte für virtuelle Maschinen verwaltet werden, welche z.B. Zugriffsrechte auf Netzwerkkarten, Ordner oder dergleichen sein können.

Die US 2007 / 0 250 833 A1 offenbart ein Verfahren bei welchem für eine Vielzahl von virtuellen Maschinen Rechteinformationen von einem Manager an Hosts der virtuellen Maschinen übermittelt werden, wobei die Hosts einem Benutzer einen Zugriff auf die virtuellen Maschinen in Abhängigkeit von den Rechteinformationen gewähren.

In "Terra: A Virtual Machine-Based Platform for Trusted Computing" von Tal Garfinkel et al. wird eine flexible Architektur für eine sichere computerbasierte Verarbeitung offenbart.

Herkömmliche Verfahren sind typischerweise mit einem hohen Aufwand verbunden, da eine entsprechende Infrastruktur zur Verwaltung und Durchsetzung von Zugriffsrechten bereitgestellt werden muss. Es besteht daher Bedarf, auch in bestehenden Infrastrukturen Zugriffsrechte auf Nutzdaten sicher zu gewährleisten. Ferner gibt es eine Vielzahl von Sicherheitslücken bzw. Umgehungsmöglichkeiten bei herkömmlichen Verfahren zur Rechteverwaltung.

Es ist daher eine Aufgabe der vorliegenden Erfindung ein Verfahren und eine Vorrichtung bereitzustellen, welche ein verbessertes und komfortables Zugreifen auf Steuerungsdaten ermöglichen.

Diese Aufgabe wird mittels eines Verfahrens zum Zugreifen auf Steuerungsdaten, aufweisend die Merkmale des Patentanspruchs 1, gelöst.

Bei Steuerungsdaten kann es sich um jegliche Art von Nutzdaten und/oder Signalen handeln. Diese Steuerungsdaten können zum Beispiel mittels eines Auslesens eines Datenspeichers bereitgestellt werden oder können von einer weiteren Datenverarbeitungseinheit mittels eines Netzwerks übertragen werden. Ein Bereitstellen von Steuerungsdaten kann ferner ein Auswählen bestimmter Steuerdaten aus einer Vielzahl von Steuerungsdaten umfassen. Zum Beispiel kann eine Datenbank Steuerungsdaten aufweisen, wobei die Steuerungsdaten mit weiteren Metadaten zumindest einen Teil der Steuerungsdaten beschreiben. Es ist möglich, dass bestimmte Steuerungsdaten aus einem Content Management System in Abhängigkeit der abgespeicherten Metadaten ausgewählt werden. Bei den Steuerungsdaten kann es sich auch um Dokumente handeln. Ein Dokument kann unter anderem eine textuelle Spezifikation und/oder Konstruktionspläne aufweisen. Ferner kann es sich bei den Steuerungsdaten um Konfigurationsdateien einer Maschine, insbesondere einer Rechenmaschine, oder einer Fertigungsanlage handeln. Das Bereitstellen von Steuerungsdaten kann mehrere Unterschritte, zum Beispiel ein Errechnen, Messen und/oder Schätzen von Steuerungsdaten umfassen.

Die Rechteinformation kann bezüglich zumindest einem Teil der Steuerungsdaten Zugriffsinformationen beziehungsweise Zugriffsrechte definieren. Zum Beispiel ist es möglich, dass eine bestimmte Recheneinheit, welche zum Beispiel mittels einer IP-Adresse und/oder eines IP-Bereiches festgelegt wird, lediglich auf einzelne Teile der Steuerungsdaten Rechte erhält. Die Rechteinformation beschreibt, welche Rechte ein bestimmter Akteur auf die bereitgestellten Steuerungsdaten hat. Ein Recht kann hierbei ein Zugriffsrecht, Ausführungsrecht, ein Druckrecht, ein Ausleserecht, ein Änderungsrecht und/oder weitere Rechte bezüglich Steuerungsdaten umfassen. Definieren die Steuerungsdaten Ausführungsbefehle beziehungsweise Steuerbefehle, so ist es möglich, dass die Rechteinformation ein Veranlassen der Ausführung dieser Steuerungsbefehle nur unter gewissen Bedingungen bestehen soll. Ein Beispiel für eine solche Bedingung ist ein Zeitstempel. Somit ist es einem bestimmten Benutzer nur zu einem bestimmten Zeitpunkt beziehungsweise zu einem bestimmten Zeitbereich möglich ein Ausführen der Steuerungsbefehle zu veranlassen.

Die Rechteinformation kann aus den Steuerungsdaten extrahiert werden und/oder separat zu den Steuerungsdaten bereitgestellt werden. Ferner ist es möglich, dass die Informationen in den Steuerungsdaten umfasst sind. Zum Beispiel kann ein Bereitstellen von mindestens einer Rechteinformation mittels einer Analyse der Steuerungsdaten folgen. Die Rechteinformation kann in den Steuerungsdaten eincodiert sein. Beispielsweise werden die Steuerungsdaten in einer Datei bereitgestellt, die Datei aufweisend mindestens eine Rechteinformation. Wird zumindest ein Teil der Steuerungsdaten in einem XML-Format bereitgestellt, so ist es möglich, gemäß einem vordefinierten Format an einer bestimmten Stelle innerhalb der Datei Steuerungsdaten zu definieren und an einer weiteren Stelle der Datei Rechteinformationen zu codieren.

Eine Recheneinheit ist hierbei geeignet die Datei auszulesen und anhand von Metainformationen Steuerungsdaten und/oder Rechteinformationen zu erkennen und anschließend auszulesen. Ferner ist es möglich, dass die Rechteinformation von einem ersten Server bereitgestellt wird und die Steuerungsdaten von einem zweiten Server bereitgestellt werden. Daher kann sich eine Rechteinformation auf eine Maschinenkonfiguration beziehen, wobei die Maschine gemäß der Rechteinformation auf die Steuerungsdaten zugreift. Beispielsweise kann die Rechteinformation einen Datenspeicher beschreiben, welcher bei einer Ausführung der Steuerungsdaten Verwendung finden soll. Eine Rechteinformation ist zum Beispiel, dass ein Puffer einer Maschine eine gewisse Anzahl an Kilobyte aufweist.

Sind zu dem Ausführen der Steuerungsdaten weitere Einheiten notwendig, so kann die Rechteinformation eben diese weiteren Einheiten spezifizieren. Veranlassen die Steuerungsdaten ein Drucken von Information auf ein Ausgabemedium, kann mittels der Rechteinformation eine Druckeinheit beschrieben werden. Veranlassen die Steuerungsdaten zum Beispiel ein Ausdrucken von Kopien mittels eines Farbkopierers, kann in der Rechteinformation spezifiziert werden, ob bei dem Ausdrucken tatsächlich Farbe Verwendung finden soll. Die Rechteinformation kann somit einen Hinweis darauf geben, dass Befehle bezüglich eines Farbkopierers lediglich einen Schwarz-weiß Druck veranlassen können. Ferner kann die Rechteinformation definieren, dass ein bestimmtes Rechensystem bei der Kopiermaschine einen Farbdruck veranlassen kann, während ein weiteres Rechnersystem lediglich einen schwarz-weiß Druck veranlassen kann.

Ferner erfolgt ein Erstellen einer virtuellen Maschine gemäß der mindestens einen bereitgestellten Rechteinformation. Das Erstellen einer virtuellen Maschine kann gemäß einem Nachbilden, Emulieren, Virtualisieren und/oder zumindest einem Teil davon durchgeführt werden. Zum Beispiel kann die virtuelle Maschine teils durch Emulieren und teils durch Virtualisieren erstellt werden. Hierbei werden physische Hardwareeinheiten eines Hostsystems, auch Gastsystem genannt, nachgebildet. Zum Beispiel umfasst das Hostsystem eine physische Hardwareeinheit, welche gemäß einem Wechseldatenträger als Lesegerät agiert. Eine physische Hardwareeinheit, zum Beispiel ein CD-Lesegerät, kann in der virtuellen Maschine gemäß einem Nachbilden simuliert werden. Hierbei stellt die virtuelle Maschine zumindest einen Teil der Funktionalität des physischen CD-Lesegeräts bereit. Bei der virtuellen Maschine kann es sich somit um eine Anzahl von Steuerbefehlen handeln, welche eine physische Hardwareeinheit oder eine Mehrzahl von physischen Hardwareeinheiten, welche miteinander interagieren, bereitstellt. Bei der somit erstellten virtuellen Maschine gemäß zumindest einer bereitgestellten Rechteinformation handelt es sich folglich um ein Abbild des Hostsystems gemäß einer weitgestellten Spezifikation.

Das Nachbilden der physischen Hardwareeinheit ist besonders dann vorteilhaft, wenn die physische Hardwareeinheit in Betrieb ist und der Betrieb nicht unterbrochen werden kann. Bietet die physische Hardwareeinheit beispielsweise einen Dienst an, so kann sie nachgebildet werden und unter Verwendung der nachgebildeten, virtuellen Hardwareeinheit können Anforderungsparameter an die physische Hardwareeinheit bestimmt werden. Der angebotene Dienst kann somit ohne Unterbrechung der physischen Hardwareeinheit angeboten werden. Insbesondere ist es möglich, das Nachbilden von Hardwareeinheiten softwarebasiert durchzuführen. Hierzu können Betriebsparameterprofile ohne Modifikation des physischen Rechnersystems systematisch und reproduzierbar variiert werden.

Das Nachbilden kann auch ein Emulieren oder Virtualisieren veranlassen. Hierbei kann Emulieren das teilweise Bereitstellen von Funktionalität durch die virtuelle Hardwareeinheit umfassen, wobei nicht bereitgestellte Funktionalität von einer physischen Hardwareeinheit bereitgestellt werden kann. Virtualisieren kann hierbei das Bereitstellen von Funktionalität durch die virtuelle Hardwareeinheit umfassen. Die nachgebildete Hardwareeinheit liegt virtuell vor und wird beispielsweise durch eine Softwarekomponente und/oder durch eine Bibliothek beschrieben und/oder nachgebildet. Die physische Hardwareeinheit liegt physisch, also materiell, vor.

Emulieren kann das teilweise bereitstellen von Funktionalität durch die virtuelle Hardwareeinheit umfassen, wobei nicht bereitgestellte Funktionalität von einer physischen Hardwareeinheit bereitgestellt werden kann. Beispielsweise können bei einem Emulieren Lesezugriffe auf einen ersten Datensatz einer Festplatte durch eine virtuelle Hardwareeinheit ausgeführt werden und Schreibzugriffe auf einen zweiten Datensatz der Festplatte durch eine physische Hardwareeinheit ausgeführt werden.

Virtualisieren kann hierbei das vollständige Bereitstellen von Funktionalität durch die virtuelle Hardwareeinheit beschreiben. Beispielsweise werden bei einem Virtualisieren einer physischen Festplatte die Funktionalität der physischen Festplatte wie beispielsweise das Lesen und das Schreiben der Datensätze, durch eine virtuelle Festplatte ausgeführt. Eine virtuelle Festplatte ist hierbei eine virtuelle Hardwareeinheit, welche die Funktionalität einer physischen Festplatte durch Emulieren oder Virtualisieren bereitstellt. Betriebsparameter der virtuellen Hardwareeinheit wie beispielsweise die Speicherkapazität können hierbei unter Verwendung einer physischen Festplatte bereitgestellt werden.

Somit wird ein physisches Rechnersystem als ein virtuelles Rechnersystem nachgebildet, wobei das virtuelle Rechnersystem wiederum aus mehreren virtuellen Hardwareeinheiten bestehen kann. Die bereitgestellte Rechteinformation beschreibt somit virtuelle Hardwareeinheiten der virtuellen Maschine, welche gemäß einem Hostsystem agieren. Es ist zum Beispiel möglich, dass ein Benutzer ein Rechensystem betreibt, an welches ein Drucker angeschlossen ist.

Erhält nun dieser Nutzer Steuerungsdaten aufweisend mindestens eine Rechteinformation, wobei die Rechteinformation keine Druckerrechte gewährt, so wird eine virtuelle Maschine erstellt, welche das Hostsystem des Benutzers nachbildet. Bei diesem nachgebildeten Hostsystem, also der virtuellen Maschine, ist jedoch kein virtueller Drucker bereitgestellt. Ferner kann der virtuellen Maschine gemäß der Rechteinformation untersagt werden, auf den physischen Drucker des Hostsystems zuzugreifen. Folglich ist bei einem Ausführen der Steuerungsdaten in der virtuellen Maschine kein Drucken möglich.

Folglich erfolgt ein Zugreifen auf die bereitgestellten Steuerungsdaten mittels der virtuellen Maschine. Der Zugriffsberechtigte kann somit seine Zugriffsrechte lediglich mit eben dieser virtuellen Maschine wahrnehmen. Somit ist das Zugreifen auf die bereitgestellten Steuerungsdaten lediglich gemäß der bereitgestellten Rechteinformation möglich. Die bereitgestellten Steuerungsdaten können somit nicht direkt auf dem Hostsystem ausgeführt werden, sondern lediglich in einer höheren Abstraktionsschicht in der virtuellen Maschine ausgeführt werden.

In einer Ausführungsform des Verfahrens gemäß der vorliegenden Erfindung umfasst das Zugreifen auf die bereitgestellten Steuerungsdaten ein Auslesen, ein Schreiben, ein Ausführen, ein Drucken und/oder ein Weiterleiten der Steuerungsdaten.

Dies hat den Vorteil, dass der Zugriff auf die bereitgestellten Steuerungsdaten bezüglich einer Vielzahl von Operationen beschränkt werden kann.

In einer weiteren Ausführungsform des Verfahrens gemäß der vorliegenden Erfindung wird das Zugreifen auf einen Teil der Steuerungsdaten durchgeführt.

Dies hat den Vorteil, dass Zugriffsrechte auch auf lediglich einen Teil der Steuerungsdaten definiert werden können.

In einer weiteren Ausführungsform des Verfahrens gemäß der vorliegenden Erfindung werden die Steuerungsdaten verschlüsselt bereitgestellt.

Das hat den Vorteil, dass die Steuerungsdaten gemäß einem Verschlüsselungsalgorithmus gesichert und weiterhin gesichert übertragen werden können.

In einer weiteren Ausführungsform des Verfahrens gemäß der vorliegenden Erfindung umfasst ein Erstellen der virtuellen Maschine ein Entschlüsseln der Steuerungsdaten.

Dies hat den Vorteil, dass die Steuerungsdaten auf Empfängerseite entschlüsselt werden und erst bei einem Bearbeiten durch die virtuelle Maschine einsehbar sind.

In einer weiteren Ausführungsform des Verfahrens gemäß der vorliegenden Erfindung wird die Rechteinformation mittels eines Servers abgespeichert und/oder bereitgestellt.

Dies hat den Vorteil, dass die Rechteinformation von einer separaten Recheneinheit bzw. Speichereinheit, zum Beispiel einen Rechteserver, bereitgestellt werden kann.

In einer weiteren Ausführungsform des Verfahrens gemäß der vorliegenden Erfindung weist die bereitgestellte Rechteinformation einen Schlüssel, eine Nutzungsberechtigung, eine Nutzungseinschränkung, einen Hinweis auf eine Zugriffsberechtigung, insbesondere eines Rechnersystems und/oder einen Zeitstempel auf.

Dies hat den Vorteil, dass die Rechteinformation Zugriffsrechte feingranular und bezüglich mehrerer Eigenschaften beschreiben kann.

In einer weiteren Ausführungsform des Verfahrens gemäß der vorliegenden Erfindung liegen die Steuerungsdaten als ein Dokument, ein Quellcode, eine graphische Information, eine Wartungsanweisung, Wartungsdaten, Maschinenkonfigurationsdaten, Konstruktionsdaten, Diagnosedaten und/oder eine Datei vor.

Dies hat den Vorteil, dass die Steuerungsdaten jegliche Inhalte bzw. Informationen beschreiben können.

In einer weiteren Ausführungsform des Verfahrens gemäß der vorliegenden Erfindung werden die Steuerungsdaten als eine XML-Datei, ein formales Modell, ein semiformales Modell, eine Datenbank und/oder eine Nachricht bereitgestellt.

Dies hat den Vorteil, dass die Steuerungsdaten auf eine Vielzahl von Weisen codiert, bereitgestellt und/oder errechnet werden können.

In einer weiteren Ausführungsform des Verfahrens gemäß der vorliegenden Erfindung wird eine Policy für die virtuelle Maschine in Abhängigkeit der Rechteinformation erstellt.

Dies hat den Vorteil, dass bereits etablierte Verfahren zur Beschreibung der virtuellen Maschine wiederverwendet werden können.

In einer weiteren Ausführungsform des Verfahrens gemäß der vorliegenden Erfindung wird die virtuelle Maschine in Abhängigkeit der erstellten Policy konfiguriert, betrieben und/oder ausgeführt.

Dies hat den Vorteil, dass die Policy sowohl zur Laufzeit einem Betreiben einer virtuellen Maschine als auch zu einer Erstellungszeit der virtuellen Maschine Anwendung finden kann.

In einer weiteren Ausführungsform des Verfahrens gemäß der vorliegenden Erfindung wird die virtuelle Maschine in einem flüchtigen Speicher erstellt.

Dies hat den Vorteil, dass die virtuelle Maschine in einem typischerweise schnellen Speicher abgelegt werden kann, wobei Inhalte des flüchtigen Speichers bei einem Abschalten des Hostsystems gelöscht werden.

In einer weiteren Ausführungsform des Verfahrens gemäß der vorliegenden Erfindung wird nach einem Zugreifen auf die Steuerungsdaten die virtuelle Maschine gelöscht.

Dies hat den Vorteil, dass die virtuelle Maschine nicht mehr weiter besteht und somit ein erneutes Zugreifen auf die Steuerungsdaten verhindert werden kann.

Die Aufgabe wird ferner gelöst durch eine Vorrichtung zum Zugriff auf Steuerungsdaten gemäß einer bereitgestellten Rechteinformation mit den Merkmalen des Patentanspruchs 11.

Ferner werden ein Computerprogrammprodukt mit den Merkmalen des Patentanspruchs 12, welches die Durchführung eines beschriebenen Verfahrens veranlasst sowie ein Datenspeicher mit den Merkmalen des Patentanspruchs 13, der das Computerprogrammprodukt speichert, bereitgestellt.

Weitere vorteilhafte Ausgestaltungen der Erfindung sind Gegenstand der Unteransprüche sowie der im Folgenden beschriebenen Ausführungsbeispiele. Im Weiteren wird die Erfindung anhand beispielhafter Implementierungen unter Bezugnahme auf die beigelegten Figuren näher erläutert.

Es zeigt dabei:
- Figur 1: ein Nachrichtenaustauschdiagramm eines herkömmlichen Rechteverwaltungsverfahrens.
- Figur 2: ein Blockdiagramm einer Systemarchitektur, wie sie in einem Verfahren zum Zugreifen auf Steuerungsdaten gemäß einer Ausführungsform der vorliegenden Erfindung Anwendung finden kann;
- Figur 3: ein Blockdiagramm einer Vorrichtung zum Zugriff auf Steuerungsdaten gemäß einer Ausführungsform der vorliegenden Erfindung;
- Figur 4: ein Blockdiagramm einer Vorrichtung zum Zugriff auf Steuerungsdaten gemäß einer weiteren Ausführungsform der vorliegenden Erfindung;
- Figur 5: ein Aktivitätsdiagramm eines Verfahrens zum Zugreifen auf Steuerungsdaten gemäß einer Ausführungsform der vorliegenden Erfindung;
- Figur 6: ein detailliertes Aktivitätsdiagramm eines Verfahrens zum Zugreifen auf Steuerungsdaten gemäß einer Ausführungsform der vorliegenden Erfindung;
- Figur 7: ein Blockdiagramm einer Vorrichtung zum Zugriff auf Steuerungsdaten gemäß einer Ausführungsform der vorliegenden Erfindung; und
- Figur 8: ein detailliertes Blockdiagramm einer Vorrichtung zum Zugriff auf Steuerungsdaten gemäß einer Ausführungsform der vorliegenden Erfindung.

In den Figuren sind gleiche bzw. funktionsgleiche Elemente mit den gleichen Bezugszeichen versehen worden, sofern nichts anderes angegeben ist.

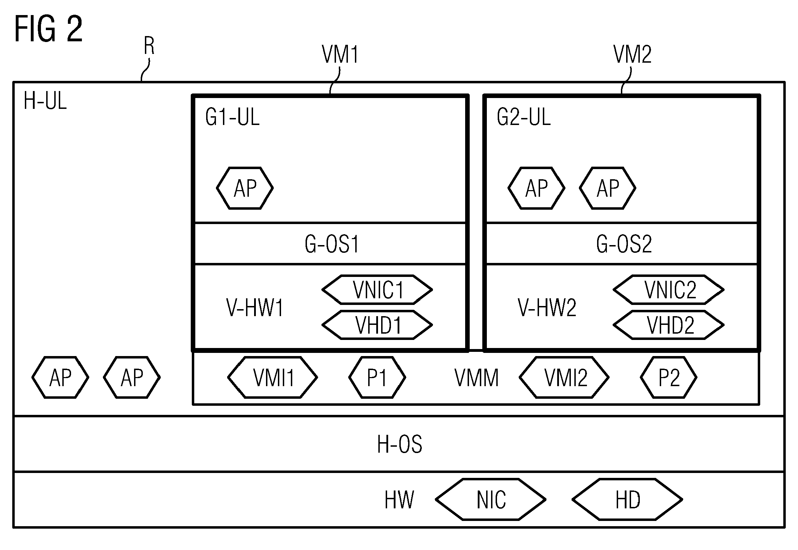

Figur 2 zeigt ein Rechnersystem R, welches in einer Ausführungsform eines Verfahrens zum Zugreifen auf Steuerungsdaten gemäß einer Ausführungsform der vorliegenden Erfindung als Hostsystem für eine Virtualisierung verwendet werden kann. Das Hostsystem weist eine Vielzahl von Hardware-Komponenten HW, zum Beispiel den Netzwerkadapter NIC und die Festplatte HD, auf. Auf dem Hostrechner R kommt ein Hostbetriebssystem H-OS zum Einsatz. Hierbei kann ein Benutzermodus H-UL, auch als Userland bezeichnet, bereitgestellt werden, in dem Anwendungsprogramme AP ausgeführt werden. In der vorliegenden Figur 2 kommt eine Mehrzahl von Ausführungsprogrammen AP zum Einsatz, welche jeweils als AP bezeichnet werden. Folglich kann es sich bei den Anwendungsprogrammen AP jeweils um unterschiedliche Anwendungsprogramme AP handeln.
Ferner wird auf dem Hostrechner R eine spezielle Anwendung, nämlich der Virtual-Machine-Monitor VMM, auch virtueller Maschinenmonitor genannt, ausgeführt, welche eine virtuelle Ausführungsumgebung bereitstellt. Ferner werden zwei virtuelle Maschinen VM1 und VM2 zur Ausführung gebracht. Es wird durch den virtuellen Maschinenmonitor VMM jeweils eine virtuelle Hardware, zum Beispiel V-HW1 beziehungsweise V-HW2, mit einem virtuellen Netzwerkadapter, zum Beispiel VNIC1 oder VNIC2, und einer virtuellen Festplatte, zum Beispiel VHD1 oder VHD2, bereitgestellt. In der virtuellen Maschine VM wird ein Gastbetriebssystem G-OS1, bzw. G-OS2 sowie im Benutzermodus, zum Beispiel dem Benutzermodus G1-UL oder G2-UL, der jeweiligen virtuellen Maschine VM mehrere Anwendungsprogramme AP betrieben. Für eine virtuelle Ausführungsumgebung ist ein Image, zum Beispiel VMI1 oder VMI2 vorhanden, dass ein Abbild der virtuellen Ausführungsumgebung darstellt.
Der virtuelle Maschinenmonitor verwaltet ferner zwei Policies, P1 und P2, die jeweils die Möglichkeit einer virtuellen Ausführungsumgebung definieren. Folglich beschreiben die Policies P1 und P2 eine Konfiguration einer virtuellen Maschine. Zugriffe der virtuellen Ausführungsumgebung sind nur möglich, soweit diese durch die jeweilige Policy zugelassen sind.

Ferner ist der Rechner R über den Netzwerkadapter NIC mit einem Netzwerk verbunden, derart dass ein Rechteserver angesprochen werden kann.

In einer Ausführungsform des Verfahrens zum Zugreifen auf Steuerungsdaten gemäß der vorliegenden Erfindung können auf dem Rechensystem R die folgenden Verfahrensschritte ausgeführt werden:
1. Eingabe einer Anweisung zum Öffnen eines Anwendungsprogramms AP auf dem Rechensystem sowie der Angabe einer Datei als Aufrufparameter
2. Prüfen, zum Beispiel durch das Rechnerbetriebssystem H-OS, ob die Datei rechtegeschützt ist. Falls dies nicht der Fall ist, so wird das Anwendungsprogramm ab hier mit der Angabe der Datei als Aufrufparameter auf dem Rechner gestartet und direkt, zum Beispiel in dem Nutzermodus H-UL, ausgeführt. Ferner kann ein Überprüfen des Anwendungsprogramms AP bezüglich eines möglichen Rechteschutzes durchgeführt werden. Erlaubt die Anwendung AP einen Rechteschutz, so wird das Anwendungsprogramm AP mit der Angabe der Datei als Aufrufparameter auf dem Rechensystem R gestartet und direkt in dem Benutzermodus H-UL ausgeführt.
3. Ist ein möglicher Rechteschutz nicht vorgesehen, so können in einem weiteren Verfahrensschritt die Zugriffsrechte des aufrufenden Nutzers, welcher auf die Steuerungsdaten zugreifen will, bestimmt werden. Dies kann zum Beispiel mittels einer Anfrage an einen Rechteserver geschehen.
4. Daraufhin kann ein Übersetzen der bestimmten Berechtigungen des aufrufenden Nutzers in eine korrespondierende virtuelle Maschinenkonfiguration VMC durchgeführt werden.
5. In einem weiteren Verfahrensschritt kann ein Entschlüsseln und gegebenenfalls ein Formatkonvertieren der Datei erfolgen.
6. In einem darauffolgenden Verfahrensschritt kann ein Erzeugen eines virtuellen Maschinenimages VMI erfolgen, welche weiterhin die Datei aufweist sowie das aufgerufene Anwendungsprogramm AP mitsamt der zugehörigen Policy.
7. In einem weiteren Verfahrensschritt kann ein Starten des erzeugten virtuellen Maschinenimages VMI erfolgen.
8. In einem darauffolgenden Verfahrensschritt kann ein Starten des Anwendungsprogramms AP in der virtuellen Ausführungsumgebung, d. h. in der virtuellen Maschine durchgeführt werden.
9. In einem weiteren Verfahrensschritt erfolgt ein Zugreifen auf die Steuerungsdaten der Datei der virtuellen Ausführungsumgebung.

Die beschriebenen Verfahrensschritte können iterativ und/oder in anderer Reihenfolge ausgeführt werden.

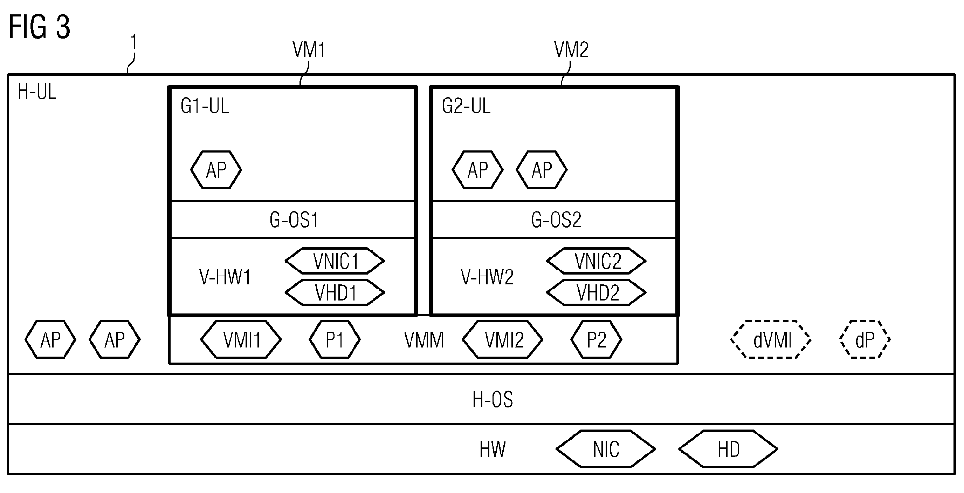

Figur 3 zeigt ein schematisches Blockdiagramm einer Vorrichtung 1 zum Zugriff auf Steuerungsdaten gemäß einer Ausführungsform der vorliegenden Erfindung. In der vorliegenden Ausführungsform erfolgt ein Erstellen eines dynamischen virtuellen Maschinenimages dVMI und ferner ein Erstellen einer zugehörigen Policy dP. Folglich liegt eine virtuelle Maschine dVMI vor, welche gemäß einer bereitgestellten Rechteinformation, nämlich der Policy dP, erstellt ist

Es ist jedoch auch möglich, dass vorerst lediglich ein Image der virtuellen Maschine erzeugt ist. Das Image der virtuellen Maschine dVMI beschreibt die virtuelle Maschine, mittels der auf die bereitgestellten Steuerungsdaten zugegriffen wird sowie entsprechende Informationen, welche zum Betreiben der virtuellen Maschine notwendig sind. Zum Beispiel kann das dynamische virtuelle Maschinenimage dVMI auch die Steuerungsdaten abspeichern. In einer Ausführungsform liegt das dynamische virtuelle Maschinenimage dVMI als eine Datei, welche in einem Speichersystem des Hostrechners R gespeichert ist, vor.

In einer weiteren Ausführungsform erfolgt ein Erstellen der virtuellen Maschine dVM in Abhängigkeit des dynamischen virtuellen Maschinenimages dVMI und der Policy dP.

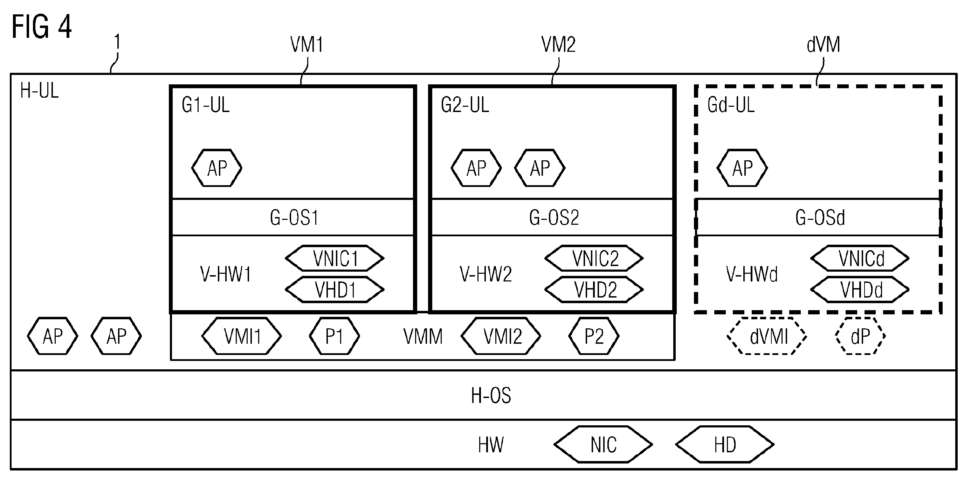

Eine solche virtuelle Maschine dVM ist in der Figur 4 gemäß einer Ausführungsform des Verfahrens zum Zugreifen auf Steuerungsdaten gemäß der vorliegenden Erfindung dargestellt. Die erstellte virtuelle Maschine dVM weist einen Benutzermodus Gd-UL auf, welcher ein Ausführen bzw. Zugreifen auf die bereitgestellten Steuerungsdaten mittels der virtuellen Maschine dVM ermöglicht. Folglich kann das auszuführende Programm AP in der virtuellen Maschine dVM ausgeführt werden, wobei jedoch Zugriffsrechte gemäß der Policy dP beschränkt sind. Somit kann auf dem physischen Rechner das System ein virtuelles Rechensystem dVM ausgeführt werden, welches wiederum ein Ausführen des Anwendungsprogrammes AP veranlasst.

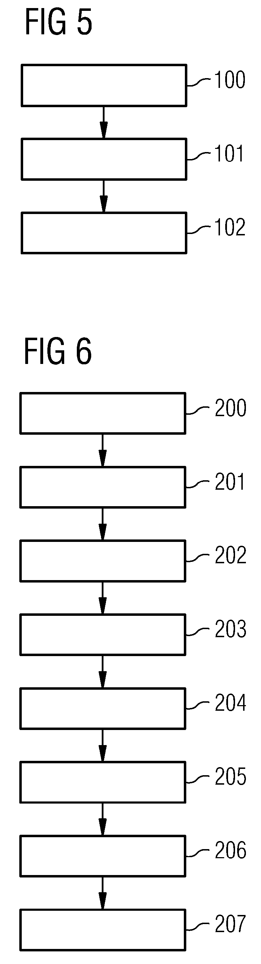

Figur 5 zeigt ein Aktivitätsdiagramm des Verfahrens zum Zugreifen auf Steuerungsdaten gemäß einer bereitgestellten Rechteinformation nach einer Ausführungsform der vorliegenden Erfindung. Das Verfahren zum Zugreifen auf Steuerungsdaten weist die folgenden Schritte auf:
Bereitstellen 100 von Steuerungsdaten und mindestens einer Rechteinformation;
Erstellen 101 einer virtuellen Maschine gemäß der mindestens einen bereitgestellten Rechteinformation; und
Zugreifen 102 auf die bereitgestellten Steuerungsdaten mittels der virtuellen Maschine.

Die beschriebenen Verfahrensschritte können iterativ und/oder in anderer Reihenfolge ausgeführt werden.

Figur 6 zeigt ein detailliertes Aktivitätsdiagramm eines Verfahrens zum Zugreifen auf Steuerungsdaten gemäß einer Ausführungsform der vorliegenden Erfindung.

Hierzu erfolgt in einem ersten Verfahrensschritt 200 ein Auswählen von Steuerungsdaten mit einer Mehrzahl von Steuerungsdaten. Die Steuerungsdaten sind zum Beispiel in einem Dokument umfasst, wobei das Dokument aus einer Vielzahl von Dokumenten ausgewählt wird. Das Auswählen der Steuerungsdaten kann durch eine Auswahleinheit, zum Beispiel ein Dokumentserver bzw. Fileserver, erfolgen. Wurden die Steuerungsdaten ausgewählt, so erfolgt in einem weiteren Verfahrensschritt 201 ein Bereitstellen eben dieser Steuerungsdaten. Ein Bereitstellen von Steuerungsdaten kann zum Beispiel mittels eines Übermittelns der Steuerungsdaten von einem Server an einen Client erfolgen. Ein Bereitstellen der Steuerungsdaten kann jedoch auch jegliches Einlesen von Daten, zum Beispiel von einem Wechseldatenspeicher, umfassen.

In Abhängigkeit der in Verfahrensschritt 201 bereitgestellten Steuerungsdaten und der in Verfahrensschritt 202 bereitgestellten Rechteinformation wird in einem darauffolgenden Verfahrensschritt 203 eine Policy erstellt. Eine Policy kann eine Konfigurationsdatei darstellen, welche bestimmte Zugriffsrechte gewährt. Ein Gewähren von Zugriffsrechten kann mittels eines Bereitstellens einer entsprechenden Funktionalität erfolgen. Werden beispielsweise Druckrechte auf einen Teil der Steuerungsdaten gewährt, so beschreibt die Policy, dass in der virtuellen Maschine ein virtueller Drucker bereitstehen muss. Folglich beschreibt die Policy virtuelle Hardwareeinheiten mitsamt deren Betriebsparameter. Ein Betriebsparameter kann zum Beispiel die Größe eines Speichers, die Geschwindigkeit eines Prozessors, eine Bandbreite einer Netzwerkverbindung und/oder Farben eines Druckers beschreiben.

In einem Verfahrensschritt 204 erfolgt ein Erstellen eines virtuellen Maschinenimages. Das virtuelle Maschinenimage kann zum Beispiel als eine Imagedatei auf dem Hostrechner gespeichert werden. Das Image beschreibt die Steuerungsdaten, die Rechteinformation, die erstellte Policy und/oder die virtuelle Maschine. Die virtuelle Maschine umfasst hierbei Hardware-komponenten, welche miteinander interagieren und somit eine Funktionalität gemäß der erstellten Policy bereitstellen. Nunmehr kann ein Betreiben der virtuellen Maschine, das heißt ein Zugreifen auf die Steuerungsdaten gemäß der Rechteinformation in einem Verfahrensschritt 205 erfolgen. Ein Zugreifen kann das Auslesen der Steuerungsdaten, zum Beispiel das Auslesen einer Abfolge von Steuerungsbefehlen, umfassen. Ein Zugreifen kann ferner ein Bereitstellen der Steuerungsdaten an einen Benutzer, zum Beispiel mittels einer Ausgabeeinheit, erstellen.

Sind die Steuerungsdaten ausgelesen, so kann in einem weiteren optionalen Verfahrensschritt 206 ein Ausführen der Steuerungsdaten erfolgen. Ein Ausführen der Steuerungsdaten ist zum Beispiel das Betreiben einer Maschine gemäß den ausgelesenen Steuerungsdaten. In einem weiteren optionalen Verfahrensschritt 207 erfolgt ein Löschen der virtuellen Maschine. Dies verhindert ein erneutes Zugreifen und Ausführen der Steuerungsdaten gemäß der bereitgestellten Rechteinformation.

Die vorbeschriebenen Verfahrensschritte können iterativ und/oder in anderer Reihenfolge ausgeführt werden.

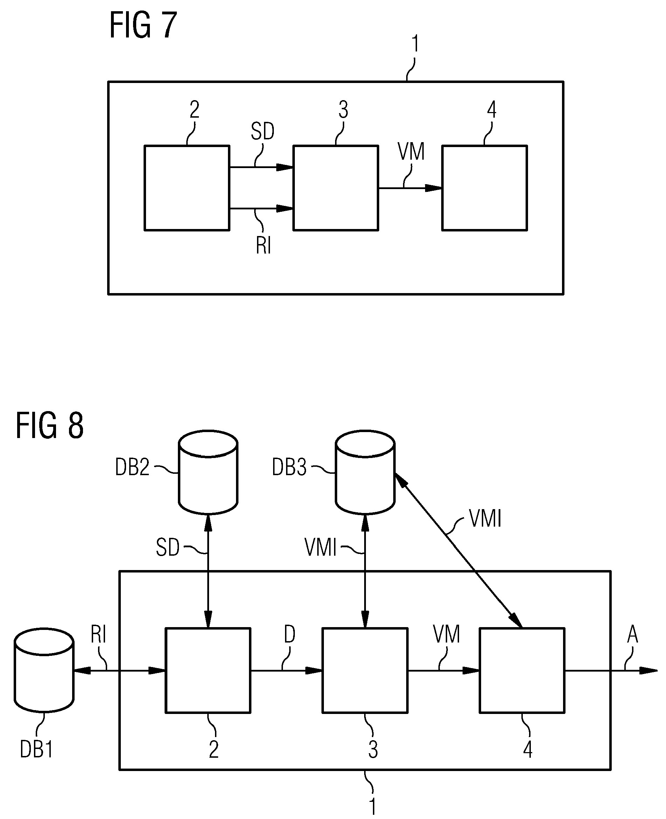

Figur 7 zeigt ein Blockdiagramm einer Vorrichtung 1 zum Zugriff auf Steuerungsdaten SD gemäß einer bereitgestellten Rechteinformation RI. Die Vorrichtung 1 weist die folgenden Einheiten auf:
eine Bereitstellungseinrichtung 2 zum Bereitstellen von Steuerungsdaten SD und mindestens einer Rechteinformation RI; eine Virtualisierungseinrichtung 3 zum Erstellen einer virtuellen Maschine VM gemäß der mindestens einen bereitgestellten Rechteinformation RI; und
eine Zugriffseinrichtung 4 zum Zugreifen auf die bereitgestellten Steuerungsdaten SD mittels der virtuellen Maschine VM.

Figur 8 zeigt eine weitere Ausführungsform einer Vorrichtung 1 zum Zugreifen auf Steuerungsdaten SD und unterscheidet sich von der Vorrichtung 1 gemäß Figur 7 wie folgt:

In der vorliegenden Ausführungsform folgt das Bereitstellen von Steuerungsdaten SD und mindestens einer Rechteinformation RI mittels mindestens eines Auslesens von Datenspeichern Es werden hierzu die Datenspeicher DB1 und DB2 verwendet. In einer alternative Ausführungsform kann auch ein Auslesen der Steuerungsdaten SD und der Rechteinformation RI aus einem einzelnen Datenspeicher erfolgen.

Die bereitgestellten Steuerungsdaten SD und die bereitgestellte Rechteinformation RI wird in einer Datei D an die Virtualisierungseinrichtung 3 übertragen. Die Virtualisierungseinrichtung 3 ist geeignet ein Image einer virtuellen Maschine VMI bereitzustellen und eine virtuelle Maschine VM der Zugriffseinrichtung 4 bereitzustellen. Ein Bereitstellen der virtuellen Maschine kann beispielsweise auch durch einen direkten Zugriff der Zugriffseinrichtung 4 auf die virtuelle Maschine erfolgen und/oder die virtuelle Maschine kann mittels eines virtuellen Maschinenimages VMI betrieben werden. Hierzu kann ein Abspeichern und Bereitstellen des virtuellen Maschinenimages VMI durch einen weiteren Datenspeicher DB3 erfolgen. In Abhängigkeit eines Zugreifens auf die bereitgestellten Steuerungsdaten SD mittels der virtuellen Maschine VM ist die Zugriffseinrichtung 4 geeignet eine Ausgabe A zu erzeugen.

## Patentansprüche

1. Verfahren zum Zugreifen auf Steuerungsdaten (SD) einer Datei gemäß einer bereitgestellten Rechteinformation (RI), mit den folgenden Schritten:
- auf eine Eingabe einer Anweisung zum Öffnen eines Anwendungsprogramms mit einer Datei als Aufrufparameter, prüfen, ob die Datei rechtegeschützt ist, und falls die Datei rechtegeschützt ist und das Anwendungsprogramm keinen Rechteschutz erlaubt:
- Erstellen (101) eines virtuellen Maschinenimages (VMI) einer virtuellen Maschine (VM), welches eine Konfiguration (VMC) einer virtuellen Maschine (VM) und die Steuerungsdaten (SD) und ein Anwendungsprogramm (AP) zum Zugriff auf die Steuerungsdaten (SD) aufweist, gemäß mindestens einer Rechteinformation (RI), die beschreibt, welche Rechte auf die Steuerungsdaten (SD) bestehen;
- Starten des erzeugten virtuellen Maschinenimages (VMI) auf einem Rechnersystem (R);
- Ausführen des Anwendungsprogramms (AP) auf der in dem virtuellen Maschinenimage (VMI) enthaltenen virtuellen Maschine (VM); und
- Zugreifen (102) auf die Steuerungsdaten (SD) mittels des auf der virtuellen Maschine (VM) ausgeführten Anwendungsprogramms (AP) gemäß der Rechteinformation (RI).

2. Verfahren nach Anspruch 1, wobei der Schritt des Zugreifens (102) auf die Steuerungsdaten (SD) ein Auslesen, ein Schreiben, ein Ausführen, ein Drucken und/oder ein Weiterleiten der Steuerungsdaten (SD) umfasst.

3. Verfahren nach einem der vorherigen Ansprüche, wobei der Schritt des Zugreifens (102) auf einen Teil der Steuerungsdaten (SD) durchgeführt wird.

4. Verfahren nach einem der vorherigen Ansprüche, wobei der Schritt des Erstellens der virtuellen Maschine (VM) ein Entschlüsseln der Steuerungsdaten (SD) umfasst.

5. Verfahren nach einem der vorherigen Ansprüche, wobei die Rechteinformation (RI) mittels eines Servers abgespeichert und/oder bereitgestellt wird.

6. Verfahren nach einem der vorherigen Ansprüche, wobei die mindestens eine bereitgestellte Rechteinformation (RI) einen Schlüssel, eine Nutzungsberechtigung, eine Nutzungseinschränkung, einen Hinweis auf eine Zugriffsberechtigung, insbesondere eines Rechnersystems, und/oder einen Zeitstempel aufweist.

7. Verfahren nach einem der vorherigen Ansprüche, wobei die Steuerungsdaten (SD) als ein Dokument, ein Quellcode, eine graphische Information, eine Wartungsanweisung, Wartungsdaten, Maschinenkonfigurationsdaten, Konstruktionsdaten, Diagnosedaten und/oder eine Datei (D) vorliegen.

8. Verfahren nach einem der vorherigen Ansprüche, wobei die Steuerungsdaten (SD) als xml-Daten, ein formales Modell, ein semi-formales Modell, eine Datenbank und/oder eine Nachricht vorliegen.

9. Verfahren nach einem der vorherigen Ansprüche, wobei die virtuelle Maschine (VM) in einem flüchtigen Speicher erstellt wird.

10. Verfahren nach einem der vorherigen Ansprüche, weiterhin mit dem Schritt:
Löschen der virtuellen Maschine (VM) nach einem Zugreifen auf die Steuerungsdaten (SD).

11. Vorrichtung (1) zum Zugriff auf Steuerungsdaten (SD) einer Datei gemäß einer bereitgestellten Rechteinformation (RI), insbesondere zur Durchführung eines Verfahrens gemäß der Ansprüche 1 bis 10, mit:
- mit einem Hostbetriebssystem, welches einen Benutzermodus aufweist, in welchem Anwendungsprogramme ausführbar sind, und welcher ausgebildet ist auf eine Eingabe einer Anweisung zum Öffnen eines Anwendungsprogramms mit einer Datei als Aufrufparameter, zu prüfen, ob die Datei rechtegeschützt ist
- einer Virtualisierungseinrichtung (3), die falls die Datei rechtegeschützt ist und das Anwendungsprogramm keinen Rechteschutz erlaubt ein virtuelles Maschinenimage (VMI) einer virtuellen Maschine (VM), welches eine Konfiguration (VMC) einer virtuellen Maschine (VM) und die Steuerungsdaten (SD) und ein Anwendungsprogramm (AP) zum Zugriff auf die Steuerungsdaten (SD) aufweist, gemäß der mindestens einen Rechteinformation (RI) erstellt, wobei die Rechteinformation (RI) beschreibt, welche Rechte an den Steuerungsdaten (SD) bestehen;
- einem Rechnersystem (R), auf welchem das erzeugte virtuellen Maschinenimage (VMI) ausgeführt wird, und auf welchem das Anwendungsprogramm (AP) auf der in dem virtuellen Maschinenimage (VMI) enthaltenen virtuellen Maschine (VM) ausgeführt wird; und
- einer Zugriffseinrichtung (4), die auf die Steuerungsdaten (SD) mittels des auf dem Rechnersystem (R) der virtuellen Maschine (VM) ausgeführten Anwendungsprogramms (AP) gemäß der Rechteinformation (RI) zugreift.

12. Computerprogrammprodukt, welches die Durchführung eines Verfahrens gemäß einem der Ansprüche 1 bis 10 veranlasst.

13. Datenspeicher, der das Computerprogrammprodukt gemäß Anspruch 12 speichert.

## Claims

1. Method for accessing control data (SD) of a file according to a provided piece of rights information (RI), comprising the following steps:
- upon input of an instruction for opening an application program with a file as the call parameter, checking whether the file is rights-protected, and in cases where the file is rights-protected and the application program does not allow rights-protection:
- generating (101) a virtual machine image (VMI) of a virtual machine (VM), which has a configuration (VMC) of a virtual machine (VM) and the control data (SD) and an application program (AP) for access to the control data (SD), according to at least one piece of rights information (RI) which describes what rights to the control data (SD) exist;
- starting the virtual machine image (VMI) on a computer system (R);
- executing an application program (AP) on the virtual machine (VM) contained in the virtual machine image (VMI); and
- accessing (102) the control data (SD) by means of the application program (AP) executed on the virtual machine (VM) according to the rights information (RI).

2. Method according to claim 1, wherein the step of accessing (102) the control data (SD) comprises reading out, writing, executing, printing and/or forwarding the control data (SD).

3. Method according to one of the preceding claims, wherein the step of accessing (102) a part of the control data (SD) is implemented.

4. Method according to one of the preceding claims, wherein the step of generating the virtual machine (VM) comprises encrypting of the control data (SD).

5. Method according to one of the preceding claims, wherein the rights information (RI) is stored and/or provided by means of a server.

6. Method according to one of the preceding claims, wherein the at least one provided piece of rights information (RI) has a key, a usage authorisation, a usage restriction, a reference to an access authorisation, in particular of a computer system, and/or a time stamp.

7. Method according to one of the preceding claims, wherein the control data (SD) is available as a document, a source code, a piece of graphic information, a maintenance instruction, maintenance data, machine configuration data, design data, diagnostic data and/or a file (D).

8. Method according to one of the preceding claims, wherein the control data (SD) is provided as xml data, a formal model, a semi-formal model, a database and/or a message.

9. Method according to one of the preceding claims, wherein the virtual machine (VM) is generated in a volatile memory.

10. Method according to one of the preceding claims, furthermore comprising the step:
deletion of the virtual machine (VM) after accessing of the control data (SD).

11. Device (1) for accessing control data (SD) of a file according to provided rights information (RI), in particular for implementing a method according to claims 1 to 10, comprising:
- a host operating system, which has a user mode, in which application programs can be executed, and which is configured, upon input of an instruction for opening an application program with a file as the call parameter, to check whether the file is rights-protected,
- a virtualisation device (3) which, in cases where the file is rights-protected and the application program does not allow rights-protection, generates a virtual machine image (VMI) of a virtual machine (VM), which has a configuration (VMC) of a virtual machine (VM) and the control data (SD) and an application program (AP) for access to the control data (SD), according to the at least one piece of rights information (RI), wherein the rights information (RI) describes what rights to the control data (SD) exist;
- a computer system (R) on which the generated virtual machine image (VMI) is executed and on which the application program (AP) on the virtual machine (VM) contained in the virtual machine image (VMI) is executed; and
- an access device (4) which accesses the control data (SD) by means of the application program (AP) executed on the computer system (R) of the virtual machine (VM) according to the rights information (RI).

12. Computer program product which prompts the implementation of a method according to one of claims 1 to 10.

13. Data memory which stores the computer program product according to claim 12.

## Revendications

1. Procédé pour accéder à des données de commande (SD) d'un fichier selon une information sur les droits (RI) mise à disposition, comportant les étapes suivantes :
- vérifier, à la suite d'une saisie d'une instruction d'ouverture d'un programme d'application avec un fichier en tant que paramètre d'appel, si le fichier est protégé au regard des droits et, si le fichier est protégé au regard des droits et si le programme d'application ne permet pas de protection des droits :
- création (101) d'une image de machine virtuelle (VMI) d'une machine virtuelle (VM), qui présente une configuration (VMC) d'une machine virtuelle (VM) et les données de commande (SD) et un programme d'application (AP) pour l'accès aux données de commande (SD), conformément à au moins une information sur les droits (RI) qui décrit quels droits sur les données de commande (SD) existent ;
- lancement de l'image de machine virtuelle générée (VMI) sur un système informatique (R) ;
- exécution du programme d'application (AP) sur la machine virtuelle (VM) contenue dans l'image de machine virtuelle (VMI) et
- accès (102) aux données de commande (SD) au moyen du programme d'application (AP) exécuté sur la machine virtuelle (VM) conformément à l'information sur les droits (RI).

2. Procédé selon la revendication 1, l'étape d'accès (102) aux données de commande (SD) incluant une lecture, une écriture, une exécution, une impression et/ou une retransmission des données de commande (SD).

3. Procédé selon l'une des revendications précédentes, l'étape d'accès (102) à une partie des données de commande (SD) étant exécutée.

4. Procédé selon l'une des revendications précédentes, l'étape de création de la machine virtuelle (VM) comprenant un décryptage des données de commande (SD).

5. Procédé selon l'une des revendications précédentes, l'information sur les droits (RI) étant sauvegardée et/ou mise à disposition au moyen d'un serveur.

6. Procédé selon l'une des revendications précédentes, l'au moins une information sur les droits mise à disposition (RI) comportant une clé, une autorisation d'utilisation, une restriction d'utilisation, une référence à une autorisation d'accès, en particulier d'un système informatique, et/ou un horodatage.

7. Procédé selon l'une des revendications précédentes, les données de commande (SD) se présentant sous la forme d'un document, d'un code source, d'une information graphique, d'une instruction de maintenance, de données de maintenance, de données de configuration de machine, de données de construction, de données de diagnostic et/ou d'un fichier (D).

8. Procédé selon l'une des revendications précédentes, les données de commande (SD) se présentant sous la forme de données xml, d'un modèle formel, d'un modèle semi-formel, d'une base de données et/ou d'un message.

9. Procédé selon l'une des revendications précédentes, la machine virtuelle (VM) étant créée dans une mémoire volatile.

10. Procédé selon l'une des revendications précédentes, comprenant en outre l'étape suivante :
- effacement de la machine virtuelle (VM) après un accès aux données de commande (SD).

11. Dispositif (1) pour accéder à des données de commande (SD) d'un fichier selon une information sur les droits mise à disposition (RI), en particulier pour exécuter un procédé selon les revendications 1 à 10, comportant :
- un système d'exploitation hôte, comportant un mode d'utilisateur dans lequel des programmes d'application sont exécutables et qui est réalisé pour vérifier, à la suite d'une saisie d'une instruction d'ouverture d'un programme d'application avec un fichier en tant que paramètre d'appel, si le fichier est protégé au regard des droits ;
- un dispositif de virtualisation (3) qui, si le fichier est protégé au regard des droits et si le programme d'application ne permet pas de protection des droits, crée une image de machine virtuelle (VMI) d'une machine virtuelle (VM), qui présente une configuration (VMC) d'une machine virtuelle (VM) et les données de commande (SD) et un programme d'application (AP) pour l'accès aux données de commande (SD), conformément à l'au moins une information sur les droits (RI), l'information sur les droits (RI) décrivant quels droits sur les données de commande (SD) existent ;
- un système informatique (R) sur lequel est exécutée l'image de machine virtuelle générée (VMI) et sur lequel est exécuté le programme d'application (AP) sur la machine virtuelle (VM) contenue dans l'image de machine virtuelle (VMI) et
- un dispositif d'accès (4) qui accède aux données de commande (SD) au moyen du programme d'application (AP) exécuté sur le système informatique (R) de la machine virtuelle (VM) conformément à l'information sur les droits (RI).

12. Produit de programme informatique qui fait exécuter un procédé selon l'une des revendications 1 à 10.

13. Mémoire de données qui sauvegarde le produit de programme informatique selon la revendication 12
